# EUROPÄISCHE PATENTSCHRIFT

(11) **EP 1 563 560 B1**
(45) Veröffentlichungstag und Bekanntmachung des Hinweises auf die Patenterteilung: **05.04.2006**
(21) Anmeldenummer: 03769389.2
(22) Anmeldetag: 13.10.2003
(51) Int. Cl.: H01M 8/02

(54) **TRÄGERSUBSTRAT FÜR EINE ELEKTRODENSCHICHT EINER BRENNSTOFFZELLE UND HERSTELLUNGSVERFAHREN HIERFÜR**
CARRIER SUBSTRATE FOR AN ELECTRODE LAYER OF A FUEL CELL AND METHOD FOR THE PRODUCTION THEREOF
SUBSTRAT POUR UNE COUCHE D'ELECTRODE D'UNE PILE A COMBUSTIBLE ET PROCEDE DE PRODUCTION DE CETTE DERNIERE

(30) Priorität: 22.11.2002 DE 10254495
(43) Veröffentlichungstag der Anmeldung: 17.08.2005
(73) Patentinhaber: Bayerische Motoren Werke Aktiengesellschaft, 80809 München (DE)
(72) Erfinder: HOEFLER, Thomas, 81475 München (DE)
(86) Internationale Anmeldenummer: PCT/EP2003/011376
(87) Internationale Veröffentlichungsnummer: WO 2004/049484

(56) Entgegenhaltungen:
- WO-A-00/40520
- WO-A-01/09968
- WO-A-02/101859

## Beschreibung

Die Erfindung betrifft ein Verfahren zum Herstellen einer Brennstoffzelle mit einem Trägersubstrat für eine Elektrodenschicht einer Kathoden-Elektrolyt-Anoden-Einheit, das aus einer für das Brenngas oder für Luft-Sauerstoff durchlässigen Struktur besteht und mit einem metallischen Rahmen oder mit einer metallischen Bipolarplatte stoffschlüssig verbunden und elektrisch leitfähig ist, wobei die durchlässige Struktur durch eine Matrix aus einem korrosionsbeständigen Material gebildet und in diese Struktur ein geeignetes elektrisch leitfähiges Material eingebracht ist, welches im Trägersubstrat möglichst durchgehende Strompfade bildet. Zum technischen Umfeld wird neben der DE 43 40 153 C1 auf die intemationale Patentanmeldung WO02/101859 sowie auf die deutsche Patentanmeldung 102 38 859 verwiesen.

Für Festoxid-Brennstoffzellen (Solid Oxide Fuel Cell, SOFC), in denen bekanntlich durch Einleiten von Brenngas und Luft-Sauerstoff elektrischer Strom erzeugt werden kann, sind bereits unterschiedliche Herstellverfahren bekannt. So können die die Elektroden der Brennstoffzelle bildenden keramischen Schichten von Festoxidbrennstoffzellen beispielsweise durch Sintern von Grünlingen der jeweiligen Schichten (nämlich Kathode, Elektrolyt und Anode) einzeln erzeugt werden, so wie dies bei einer Brennstoffzelle nach der genannten DE 43 40 153 C1 der Fall ist.

Alternativ können die einzelnen Elektrodenschichten aufeinanderfolgend auf sog. Trägersubstrate, die durch eine metallische Matrix oder durch keramische Substrate gebildet sein können, aufgesprüht werden. Für dieses Applizieren durch Aufsprühen kommen dabei geeignete thermische Sprühverfahren in Frage, wie bspw. das Vakuum-Plasmasprühen (auch Vakuum-Plasmaspritzen genannt), atmosphärisches Plasmaspritzen, Flammspritzen, oder andere. Das sog. Trägersubstrat kann dabei die tragende Struktur der Brennstoffzelle bilden, insbesondere dann, wenn die Elektrodenschichten in Dünnschichttechnik ausgeführt sind. Für dieses Trägersubstrat werden insbesondere bei vakuumplasmagespritzten Brennstoff-Zellen poröse und somit gasdurchlässige sowie gleichzeitig stromleitende (und daher zumeist metallische) Materialien verwendet, um die Eduktzufuhr, die Produktabfuhr und die elektrische Stromleitung innerhalb der Brennstoffzelle zu ermöglichen (vgl. bspw. o.g. WO02101859).

Trägersubstrate, die für durch Sintern hergestellte Festoxidbrennstoffzellen eingesetzt werden, bestehen dabei meist aus Anoden- oder Kathodenmaterial, abhängig davon ob es sich um eine anoden- oder kathodengestützte Brennstoffzelle handelt. Diese Trägersubstrate aus Anoden- oder Kathodenmaterial weisen vorteilhafterweise sehr gute Korrosionsbeständigkeit auf und sind dabei üblicherweise in ausreichendem Maße elektrisch leitfähig. Nachteilig ist jedoch, dass sich diese keramischen Trägersubstrate nicht in stoffschlüssiger Weise mit metallischen Bipolarplatten verbinden oder in metallische Rahmen einfügen lassen, was jedoch insbesondere für den Aufbau eines stabilen Brennstoffzellen-Stacks erwünscht ist (vgl. bspw. o.g. deutsche Patentanmeldung 102 38 859)

Bspw. ein sog. Kassettendesign mit eingeschweißtem Trägersubstrat zur Reduzierung der Dichtflächen in einem Brennstoffzellen-Stack (= Stapel von Brennstoff-Einzelzellen) lässt sich vorteilhafterweise mit metallischen Trägersubstraten umsetzen, wobei anstelle der genannten Schweißverbindung auch eine Lötverbindung oder eine Klebeverbindung, d.h. allgemein eine stoffschlüssige Verbindung vorgesehen sein kann. Metallische Trägersubstrate können dabei bspw. durch Metallschäume gebildet sein oder aus Vliesen aus metallischen Fasern (geschabt oder geschnitten) bestehen oder aus Gestricken oder Feinstgeweben aufgebaut sein. Möglich sind grundsätzlich verschiedenste Techniken zum Herstellen dieser Formkörper, so auch sintermetallurgische Verfahren; es können diese Trägersubstrate aber auch als Presslinge aus Metallspänen oder Metallpulver ausgeführt sein oder aus Drahtgestricken oder Drahtgeweben bestehen.

Ein Problem kann dann jedoch die Korrosionsbeständigkeit des metallischen Materials sein, und zwar insbesondere deshalb, weil es sich bei den Trägersubstraten um hochporöse Bauteile handelt, die dann naturgemäß eine große Oberfläche aufweisen. (Bspw. kann die Porengröße im Bereich von 0,1 *µ*m - 80 *µ*m liegen bei einer Porosität von 10 - 90 %). Grundsätzlich lässt sich dieses Korrosions-Problem zwar lösen, wenn dem metallischen Material geeignete Elemente zulegiert sind, die bevorzugt im Brennstoffzellenbetrieb eine Ausbildung einer auf der Material-Oberfläche entstehenden Oxidschicht steuern. Übliche Oxidschichten, so bspw. Al₂O₃ bilden dabei zwar sehr korrosionsbeständige Schutzschichten, wirken jedoch nachteiligerweise als elektrischer Isolator, was die Funktion der Brennstoffzelle absolut behindert. Andere Oxidschichten, so bspw. Cr₂O₃, Cr,Mn-Spinelle sind zwar zumindest gering elektrisch leitfähig, besitzen dann jedoch als hochporöse Bauteile lediglich eine mittlere bis schlechte Korrosionsbeständigkeit.

In der bereits genannten internationalen Patentanmeldung WO02101859 ist noch erwähnt, dass die durchlässige Struktur zumindest teilweise mit einem korrosionsbeständigen Material überzogen sein kann, und dass eine elektrisch leitende Masse zur Herstellung der elektrischen Kontaktierung eingebracht wird.

Hiermit soll nun ein neues Verfahren zum Herstellen einer Brennstoffzelle nach dem Oberbegriff des Anspruchs 1 aufgezeigt werden, mit dem sich eine korrosionsbeständige Brennstoffzelle bilden lässt, die sich gleichzeitig sicher durch eine hohe innere elektrische Leitfähigkeit auszeichnet (= Aufgabe der vorliegenden Erfindung.

Die Lösung dieser Aufgabe ist dadurch gekennzeichnet, dass die durchlässige Struktur durch eine aus Drähten oder einem Vlies oder einer Schaumstruktur oder dgl. gebildete Matrix sowie eine hierauf aufgebrachte Deckschicht gebildet wird, auf der die Elektrodenschicht der Kathoden-Elektrolyt-Anoden-Einheit abgelagert wird, wobei die Deckschicht aus Pulverkömern oder Spänen oder Schaum aus korrosionsbeständigem Material gebildet wird, in welches nachträglich ein elektrisch leitfähiges Material eingebracht wird. Vorteilhafte Weiterbildungen sind Inhalt der Unteransprüche.

Es besteht somit die für das Brenngas oder für den Luft-Sauerstoff sog. durchlässige Struktur des Trägersubstrats aus einer korrosionsbeständigen und mit der Bipolarplatte (oder einem metallischen Rahmen oder dgl.) fügbaren Matrix, in die ein für die Brennstoffzelle, bspw. SOFC geeignetes elektrisch leitfähiges Material eingebracht ist. Dieses elektrische Material soll dabei innerhalb der sog. durchlässigen Struktur bzw. im Trägersubstrat möglichst durchgehende Strompfade bilden. Für ein derartiges Material kommt bspw. Nickel bzw. eine geeignete Nickel-Verbindung in Betracht, daneben kann das elektrisch leitfähige Material aber auch im wesentlichen aus Kupfer oder Cobalt oder Cer oder Gadolinium o.ä. bestehen. Neben Zirkon, Scandium, Ytrium kommen daneben auch Oxide der genannten Elemente sowie geeignete Mischungen in Frage, ferner Edelmetalle wie bspw. Ruthenium oder Platin. Im übrigen können vorteilhafterweise die zur Stromleitung zugesetzten Elemente auch als Katalysatoren für eine interne Reformierung des Brennstoffs in der Brennstoffzelle dienen.

Was die genannte Fügbarkeit bzw. die Möglichkeit einer stoffschlüssigen Verbindung zwischen dem Trägersubstrat bzw. der durchlässigen Struktur oder Matrix und einer metallischen Bipolarplatte (oder allgemein einem metallischen Rahmen) betrifft, so kann diese stoffschlüssige Verbindung als Lötverbindung oder Schweißverbindung oder Klebeverbindung ausgebildet sein. Die geforderte Korrosionsbeständigkeit kann dabei bspw. mit Chromeisenstählen erreicht werden, die Aluminiumoxid als Schutzschicht bilden, d.h. die Matrix kann bspw. aus einem Alumiumoxidbildner (z.B. Aluchrom®) bestehen. Es können aber auch andere korrosionsbeständige Stähle oder Legierungen zum Einsatz kommen, die insbesondere Aluminiumoxid oder Siliziumoxid als Korrosions-Schutzschicht bilden. Dabei sei darauf hingewiesen, dass die Matrix ihre Korrosionsbeständigkeit insbesondere auch dadurch erreichen kann, dass sie während des Brennstoffzellenbetriebs oder während eines Vorbehandlungsschrittes die jeweiligen Schutzschichten ausbildet, d.h. praktisch oxidiert.

Es wird somit ein korrosionsbeständiges Material bzw. ein eine Korrosionsbeständigkeit herstellendes Material für die sog. durchlässige Struktur bzw. Matrix verwendet und die geforderte elektrische Leitfähigkeit dieser Trägersubstanz dadurch hergestellt, dass zusätzlich ein für eine Brennstoffzelle (SOFC) geeignetes elektrisch leitfähiges Material in diese Matrix bzw. in die durchlässige Struktur eingebracht wird. Die durchlässige Struktur besteht aus einer aus Drähten oder einem Vlies oder einer Schaumstruktur oder dgl. gebildeten Matrix, in die als elektrisch leitfähiges Material bspw. Drähte oder Drahtstücke oder Späne, die aus einem elektrisch leitfähigem Material bestehen, integriert werden können. Auf diese Matrix ist dann eine sog Deckschicht aufgebracht, auf welcher die Elektrodenschicht der Kathoden-Elektrolyt-Anoden-Einheit gut abgelagert werden kann. Auch diese Deckschicht ist aus Pulverkörnern oder Spänen oder Schaum aus korrosionsbeständigem Material gebildet, in das dann nachträglich elektrisch leitfähiges Material bspw. in Form von Partikeln, eingebracht wird.

Die genannten Strompfade im Trägersubstrat können also durch Einbringen von leitfähigen Partikeln in die korrosionsbeständige Matrix bzw. in deren Deckschicht, d.h. in die für das Brenngas oder den Luft-Sauerstoff durchlässige Struktur erzeugt werden. Als leitfähige Partikel oder Zusatzstoffe kommen insbesondere für die Deckschicht zum einen Partikel bspw. aus Nickel oder Nickelverbindungen (oder anderen weiter oben bereits genannten Materialien) in Frage, womit sich dann möglichst leicht durchgehende Strompfade ausbilden können. Der elektrische Strom soll somit durchgehend auf derartigen Strompfaden von der Kathoden-Elektrolyt-Anoden-Einheit zur Bipolarplatte der Brennstoffzelle fließen können. Der elektrische Leitungswiderstand in der Brennstoffzelle ist dann minimal.

Um im übrigen eine Interdiffusion während des Sinterns von bspw. Nickel mit dem Grundmaterial, bspw. Stahl, der sog. Matrix zu verhindern, kann es von Vorteil sein, wenn eine der Komponenten vor dem eigentlichen Sintern voroxidiert wird bzw. die Sinterbedingungen (z.B. der Sauerstoffpartialdruck) so eingestellt werden, das sich während des Sinterns bereits eine dünne Oxidschicht ausbildet. Diese sich bspw. auf den Nickel-Partikeln bildende Oxidschicht löst sich mit dem Anfahren der Brennstoffzelle wunschgemäß selbsttätig (nämlich bei höheren Temperaturen durch Reduktion mittels Wasserstoff, der der Brennstoffzelle als Brennstoff zugeführt wird) auf.

Von Vorteil ist es insbesondere für den Fall, dass als Matrix ein Gestrick oder ein Gewebe verwendet wird, dass die Drähte des Gestricks oder des Gewebes in die aufgebrachte Deckschicht hineinragen. Dabei wurde bereits erwähnt, dass zum Einbringen von Strompfaden in eine aus Drahtstrukturen aufgebaute Matrix eine Kombination von korrosionsstabilen, eine geeignete Schutzschicht ausbildenden Drähten mit elektrisch leitfähigen, für den Brennstoffzellenbetrieb geeigneten Drähten besonders vorteilhaft ist. In entsprechender Weise können bei Vliesen (als Matrix) korrosionsbeständige und elektrisch leitfähige Drahtstücke bzw. Späne miteinander kombiniert werden.

Die Deckschicht des Trägersubstrats kann bspw. als Schlickergussfolie auf die Matrix bzw. durchlässige Unter-Struktur aufgesintert werden. Dabei hat es sich für die Haftung der Deckschicht auf der Unter-Struktur als vorteilhaft erwiesen, wenn das Gestrick oder Gewebe vorher in die SchlickergußLösung getaucht oder bspw. mittels einer Druckwalze oder einer anderen Beschichtungstechnik mit dieser versehen wird. Dadurch werden die Drähte mit dem Pulver aus der Schlickergußlösung benetzt und die Deckschicht sintert besser an, insbesondere dann, wenn diese während des Sintervorgangs beschwert wird. Deckschichten können aber auch mittels Siebdruck, Wet-Powder-Spraying usw. hergestellt werden.

Weiterhin ist es möglich, die besagten Strompfade durch Tränken der sog. durchlässigen Struktur, insbesondere der Matrix, entweder mit einer Salzlösung oder mit einem Schlicker (= Suspension oder dgl.) eines zur Stromleitung befähigten Materials herzustellen. Eine Möglichkeit zum Einbringen von elektrisch leitenden Materialien in eine inerte Matrix kann somit darin bestehen, diese Matrix mit einer Lösung oder Dispersion (bspw. mit dem gelösten Salz) eines elektrisch leitfähigen, für den BrennstoffzellenBetrieb geeigneten Materials oder eines durch Nachbehandlung in eine elektrisch leitfähige Form überführbaren Materials zu tränken. Dafür kommt bspw. eine lösliche Nickelverbindung, bsp. Nickelacet oder Nickelnitrat in Frage. Möglich ist es aber auch, die elektrisch leitfähige Komponente in Form einer Aufschlämmung oder Suspension von Metallteilchen herzustellen. Diese sog. Schlicker-Lösung kann bspw. durch Siebdruck, durch Besprühen, durch Einsaugen oder durch Eintauchen auf oder in die durchlässige Struktur (Matrix und/oder Deckschicht) aufgebracht oder eingebracht werden. Femer ist es möglich, das zur Stromleitung befähigte Material in Form einer Schmelze in die sog. durchlässige Struktur einzubringen.

Diese genannten Verfahren sind besonders vorteilhaft, da hiermit das elektrisch leitfähige Material auch in eine bereits mit dem genannten metallischen Rahmen oder der Bipolarplatte verbundene durchlässige Struktur eingebracht werden kann. So kann also bspw. eine Nickelsalzlösung gezielt in die Matrix eingebracht werden, ohne dass deren eingeschweißter Rand mit Nickel versehen wird. Dies ist insofern besonders vorteilhaft, als Nickel bekanntlich eine Veränderung des thermischen Ausdehnungskoeffizienten und der Korrosionsbeständigkeit des Stahls bewirken kann.

Zusammenfassend können also Partikel, die die elektrische Leitfähigkeit bzw. entsprechende bevorzugt durchgehende Strompfade in der besagten für Brenngas oder Luft-Sauerstoff durchlässigen Struktur herstellen, pulverförmig oder in Form einer Aufschlämmung oder Suspension oder Schmelze in die durchlässige Struktur eingebracht werden. Es ist aber auch möglich, die durchlässige Struktur mit einer Lösung des elektrisch leitfähigen Materials, insbesondere einer Metall-Verbindung, zu tränken, wobei darauf hingewiesen sei, dass die Überführung der "gelösten" Metall-Verbindung (insbesondere eines Metall-Salzes) in die leitfähige Form durchaus in den Anfahrprozess der Brennstoffzelle verlagert werden kann. Im Falle von Nickel als elektrisch leitfähigem Material reduziert der Wasserstoff im Brenngas die Nickel-Ionen in metallisches Nickel. Eine entsprechende Reduktion ist auch vor der Inbetriebnahme der Brennstoffzelle denkbar, bspw. durch Behandeln des Trägersubstrats mit Wasserstoff, Hydrazin oder anderen geeigneten Reduktionsmitteln.

Alternativ kann das Einbringen von elektrisch leitfähigem Material in die durchlässige Struktur aber bspw. auch durch Galvanisieren erfolgen, wofür jedoch die durchlässige Struktur bereits eine gewisse elektrische Leitfähigkeit aufweisen muss, oder durch Sputtern oder mittels PVD (physical vapour deposition). Dabei sei (wiederum) darauf hingewiesen, dass die sog. durchlässige Struktur fakultativ erst nach dem Galvanisieren oxidiert werden kann, d.h. die Korrosions-Schutzschicht ausbilden kann und somit korrosionsbeständig gemacht werden kann. Im übrigen sind all diese aufgeführten Verfahren sowohl für eine genannte Matrix, als auch für eine auf diese aufgebrachte Deckschicht, die dann zusammen die genannte durchlässige Struktur bilden, geeignet.

Wird die Matrix der Deckschicht durch Sintern einer Schlickergußfolie eines Metallpulvers hergestellt, so kann im übrigen ein Nickelsalz bzw. ein anderes geeignetes Metallsalz zur Herstellung der elektrischen Leitfähigkeit auch der Schlickergußlösung zugemischt werden. In diesem Fall ist es sinnvoll, wenn die sog. Matrix aus einer Kombination aus korrosionsbeständigen und elektrisch leitfähigen Materialien besteht.

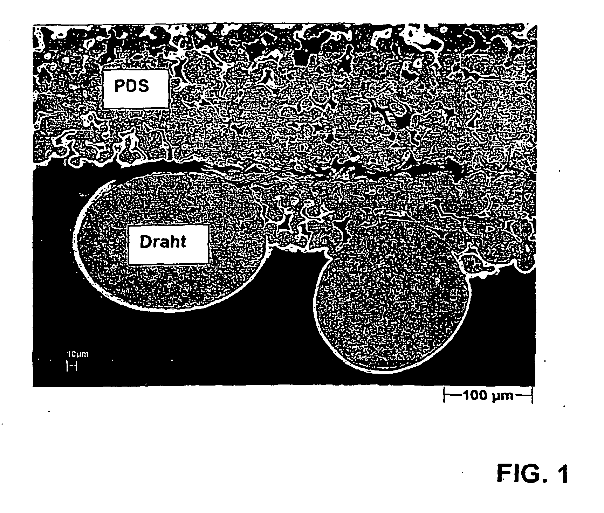

Die beigefügten Bilder zeigen Raster-Elektronen-Mikroskop-Schnitte aus einer erfindungsgemäß aufgebauten Brennstoffzelle. Figur 1 zeigt einen Ausschnitt der sog. durchlässigen Struktur, und zwar den Übergangsbereich zwischen einer aus Drähten ("Draht") gebildeten Matrix und einer hierauf aufgebrachten Deckschicht ("PDS"), wobei sowohl die Matrix, d.h. die Drähte, als auch die durch Pulverkörner gebildete Deckschicht aus Chrom-Eisen-Stahl, hier FeCrAlY, besteht. Sowohl das Material der Matrix, d.h. der Drähte, als auch das Material der Deckschicht ist galvanisch vernickelt, um die gewünschte elektrische Leitfähigkeit herzustellen. Dabei stellen die grau bzw. dunkelgrau gefärbten Flächen in Figur 1 den Chrom-Eisen-Stahl dar, während die weißen Flächenabschnitte die elektrisch leitfähigen Nickelschichten wiedergeben. Die schwarzen Flächen sind Poren bzw. Löcher in der sog. durchlässigen Struktur, welche die für die Funktion der Brennstoffzelle erforderliche Gasdurchlässigkeit sicherstellen. Dabei zeigt Figur 1 einen Zustand ohne Korrosions-Schutzschicht, d.h. eine die Korrosionsbeständigkeit gewährleistende Oxidation des Chrom-Eisen-Stahls hat in diesem Zustand noch nicht stattgefunden. Wie bereits geschildert wurde kann nämlich eine solche die Korrosionsbeständigkeit herstellende Oxidation auch zeitlich nach dem Galvanisieren mit der leitfähigen Nickelschicht erfolgen.

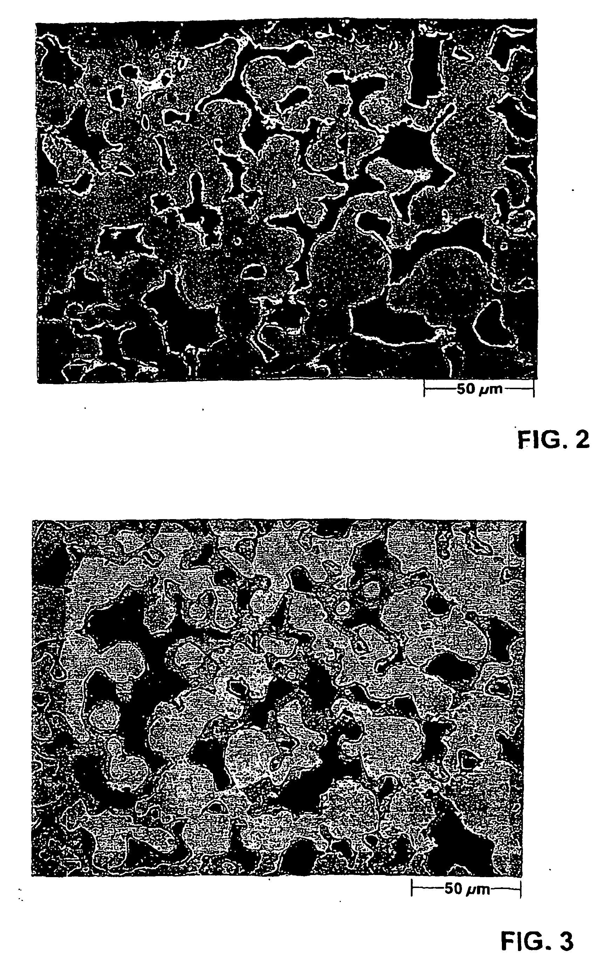

Die **Figuren 2, 3** zeigen gegenüber **Fig.1** nochmals vergrößert einen Schnitt durch die Deckschicht alleine, und zwar Fig.2 ebenfalls vor einer Oxidation des Chrom-Eisen-Materials, wobei die Farbgebung gleich derjenigen von **Fig.1** ist. In **Figur 3** ist der Zustand nach erfolgter Oxidation, d.h. nach Ausbildung der Korrosions-Schutzschicht dargestellt, wobei hier abermals die dunkelsten Flächenabschnitte Löcher bzw. Poren darstellen, welche die geforderte Gasdurchlässigkeit herstellen.

Gegebenenfalls ist es auch möglich, zwei der hier vorgeschlagenen Herstellverfahren, nämlich das Einbringen von elektrisch leitfähigen Partikeln in eine korrosionsbeständige Matrix und das Tränken derselben mit einer Lösung eines leitfähigen Materials, miteinander zu kombinieren. Ebenso ist es möglich, Trägersubstrate in Form von perforierten Blechen oder Folien (vgl. bspw. die eingangs genannte deutsche Patentanmeldung 102 38 859) als korrosionsbeständige Matrix auszuführen und die elektrische Leitfähigkeit durch Tränken dieser Trägersubstrate mit einer Lösung oder eines Schlickers mit einem leitfähigen Material zu erzeugen. Dabei ist das beschriebene Konzept sowohl für anodengestützte als auch für kathodengestützte Brennstoffzellen geeignet und zwar sowohl für durch thermisches Beschichten als auch durch Sintern hergestellte Festoxidbrennstoffzellen. Denkbar ist auch der Einsatz für andere als Festoxidbrennstoffzellen-Konzepte, wobei noch darauf hingewiesen sei, dass durchaus eine Vielzahl von Details abweichend obigen Erläuterungen gestaltet sein kann, ohne den Inhalt der Patentansprüche zu verlassen.

## Patentansprüche

1. Verfahren zum Herstellen einer Brennstoffzelle mit einem Trägersubstrat für eine Elektrodenschicht einer Kathoden-Elektrolyt-Anoden-Einheit, das aus einer für das Brenngas oder für Luft-Sauerstoff durchlässigen Struktur besteht und mit einem metallischen Rahmen oder mit einer metallischen Bipolarplatte stoffschlüssig verbunden und elektrisch leitfähig ist, wobei die durchlässige Struktur durch eine Matrix aus einem korrosionsbeständigen Material gebildet und in diese Struktur ein geeignetes elektrisch leitfähiges Material eingebracht ist, welches im Trägersubstrat möglichst durchgehende Strompfade bildet,
**dadurch gekennzeichnet, dass** die durchlässige Struktur durch eine aus Drähten oder einem Vlies oder einer Schaumstruktur oder dgl. gebildete Matrix sowie eine hierauf aufgebrachte Deckschicht gebildet wird, auf der die Elektrodenschicht der Kathoden-Elektrolyt-Anoden-Einheit abgelagert wird, wobei die Deckschicht aus Pulverkömern oder Spänen oder Schaum aus korrosionsbeständigem Material gebildet wird, in welches nachträglich ein elektrisch leitfähiges Material eingebracht wird.

2. Verfahren zum Herstellen einer Brennstoffzelle nach Anspruch 1,
**dadurch gekennzeichnet, dass** das elektrisch leitfähige Material in Form von Partikeln in die durchlässige Struktur, insbesondere in die Deckschicht, eingebracht wird.

3. Verfahren zum Herstellen einer Brennstoffzelle nach Anspruch 2,
**dadurch gekennzeichnet, dass** die Partikel pulverförmig oder in Form einer Aufschlämmung oder Suspension oder Schmelze eingebracht werden.

4. Verfahren zum Herstellen einer Brennstoffzelle nach Anspruch 1,
**dadurch gekennzeichnet, dass** die durchlässige Struktur mit einer Lösung oder Schmelze des elektrisch leitfähigen Materials oder eines nach einer umwandelnden Nachbehandlung elektrisch leitfähigen Materials getränkt wird.

5. Verfahren zum Herstellen einer Brennstoffzelle nach Anspruch 4,
**dadurch gekennzeichnet, dass** die umwandelnde Nachbehandlung in Form einer Überführung eines Metall-Salzes in die leitfähige Form in den Anfahrprozess der Brennstoffzelle integriert wird.

6. Verfahren zum Herstellen einer Brennstoffzelle nach Anspruch 1,
**dadurch gekennzeichnet, dass** das Einbringen von elektrisch leitfähigem Material in die durchlässige Struktur durch Galvanisieren oder Sputtern oder PVD (physical vapour deposition) erfolgt.

7. Verfahren nach einem der vorangegangenen Ansprüche,
**dadurch gekennzeichnet, dass** das elektrisch leitfähige Material im wesentlichen aus einem der folgenden Elemente besteht : Ni, Cu, Co, Ce, Gd, Zr, Y, Sc, Ru, Pt.

8. Verfahren nach einem der vorangegangenen Ansprüche,
**dadurch gekennzeichnet, dass** als korrosionsbeständiges Material ein Stahl, insbesondere ein Chromeisenstahl zum Einsatz kommt, der Aluminiumoxid oder Siliziumoxid als Korrosions-Schutzschicht bildet.

9. Verfahren nach einem der vorangegangenen Ansprüche,
**dadurch gekennzeichnet, dass** die Korrosionsbeständigkeit der durchlässigen Struktur **dadurch** erreicht wird, dass das hierfür verwendete Material während des Betriebs der Brennstoffzelle oder während eines geeigneten Vorbehandlungsschrittes insbesondere in Form eines Oxidationsprozesses eine Korrosions-Schutzschicht ausbildet.

10. Verfahren zum Herstellen einer Brennstoffzelle nach einem der vorangegangenen Ansprüche,
**dadurch gekennzeichnet, dass** Drähte oder Drahtstücke oder Späne aus elektrisch leitfähigem Material in die Matrix integriert werden.

11. Verfahren zum Herstellen einer Brennstoffzelle nach einem der vorangegangenen Ansprüche,
**dadurch gekennzeichnet, dass** die stoffschlüssige Verbindung zwischen der korrosionsbeständigen Matrix und der/dem metallischen Bipolarplatte oder Rahmen durch Löten oder Schweißen oder Kleben gebildet wird.

## Claims

1. A method for producing a fuel cell comprising a carrier substrate for an electrode layer of a cathode/electrolyte/anode unit, which substrate comprises a structure, which is permeable to the fuel gas or to atmospheric oxygen, and is connected in a material-uniting manner to a metallic frame or to a metallic bipolar plate and is electrically conductive, the permeable structure being formed by a matrix made from a corrosion-resistant material, and a suitable electrically conductive material, which forms in the carrier substrate current paths that are as continuous as possible, being introduced into this structure, **characterised in that** the permeable structure is formed by a matrix, which is formed from wires or a nonwoven material or a foam structure or the like, and a covering layer, which is attached to said matrix and on which the electrode layer of the cathode/electrolyte/anode unit is deposited, the covering layer being formed from powder particles or filings or foam comprising a corrosion-resistant material, into which an electrically conductive material is subsequently introduced.

2. A method for producing a fuel cell according to claim 1, **characterised in that** the electrically conductive material is introduced into the permeable structure, especially into the covering layer, in the form of particles.

3. A method for producing a fuel cell according to claim 2, **characterised in that** the particles are introduced in powder form or in the form of a suspension or melt.

4. A method for producing a fuel cell according to claim 1, **characterised in that** the permeable structure is saturated with a solution or melt of the electrically conductive material or of a material that is electrically conductive after a transforming after-treatment.

5. A method for producing a fuel cell according to claim 4, **characterised in that** the transforming after-treatment is integrated in the form of a conversion of a metallic salt into the conductive form in the start-up process of the fuel cell.

6. A method for producing a fuel cell according to claim 1, **characterised in that** electrically conductive material is introduced into the permeable structure by means of electroplating or sputtering or PVD (physical vapour deposition).

7. A method according to any one of the preceding claims, **characterised in that** the electrically conductive material substantially comprises one of the following elements: Ni, Cu, Co, Ce, Gd, Zr, Y, Sc, Ru, Pt.

8. A method according to any one of the preceding claims, **characterised in that** a steel, especially a chromite steel, which forms aluminium oxide or silicon oxide as a corrosion protection layer, is used as a corrosion-resistant material.

9. A method according to any one of the preceding claims, **characterised in that** the corrosion resistance of the permeable structure is achieved **in that** the material used for this purpose forms a corrosion protection layer during the operation of the fuel cell or during a suitable pre-treatment step, especially in the form of an oxidation process.

10. A method for producing a fuel cell according to any one of the preceding claims, **characterised in that** wires or pieces of wire or filings made from electrically conductive material are integrated into the matrix.

11. A method for producing a fuel cell according to any one of the preceding claims, **characterised in that** the material-uniting connection between the corrosion-resistant matrix and the metallic bipolar plate or frame is formed by means of soldering or welding or bonding.

## Revendications

1. Procédé de fabrication d'une pile à combustible comprenant un substrat porteur pour une couche d'électrode d'une unité cathode-électrolyte-anode composé d'une structure perméable au gaz de combustion ou à l'oxygène de l'air, relié par complémentarité de matière à un cadre métallique ou à une plaque bipolaire métallique et électriquement conducteur, la structure perméable étant formée par une matrice composée d'un matériau résistant à la corrosion et un matériau approprié électroconducteur étant inséré dans cette structure pour former des voies de passage au courant les plus continues possibles dans le substrat porteur,
**caractérisé en ce que**
la structure perméable est formée par une matrice, composée de fils ou d'un non-tissé ou d'une structure en mousse ou équivalent ainsi que par une couche de revêtement appliquée sur celle-ci et sur laquelle la couche d'électrode de l'unité cathode-électrolyte-anode est déposée, la couche de revêtement étant composée de grains de poudre ou de copeaux ou de mousse d'un matériau résistant à la corrosion, dans lequel est ensuite inséré un matériau électroconducteur.

2. Procédé de fabrication d'une pile à combustible selon la revendication 1,
**caractérisé en ce que**
le matériau électroconducteur est inséré sous forme de particules dans la structure perméable, en particulier dans la couche de revêtement.

3. Procédé de fabrication d'une pile à combustible selon la revendication 2,
**caractérisé en ce que**
les particules sont insérées sous forme de poudre ou sous la forme d'une élutriation ou d'une suspension ou d'une fusion.

4. Procédé de fabrication d'une pile à combustible selon la revendication 1,
**caractérisé en ce que**
la structure perméable est imprégnée d'une solution ou d'une fusion du matériau électro-conducteur ou d'un matériau devenu électro-conducteur après un traitement ultérieur de transformation.

5. Procédé de fabrication d'une pile à combustible selon la revendication 4,
**caractérisé en ce que**
le traitement ultérieur de transformation est intégré au moyen d'une transformation d'un sel métallique sous la forme conductrice dans le processus de démarrage de la pile à combustible.

6. Procédé de fabrication d'une pile à combustible selon la revendication 1,
**caractérisé en ce que**
l'insertion du matériau électroconducteur dans la structure perméable s'effectue au moyen d'une galvanisation ou d'une pulvérisation ou d'un dépôt physique en phase gazeuse (PVD : physical vapour deposition).

7. Procédé selon l'une quelconque des revendications précédentes,
**caractérisé en ce que**
le matériau électroconducteur est composé pour l'essentiel d'un des éléments suivants : Ni, Cu, Co, Ce, Gd, Zr, Y, Sc, Ru, Pt.

8. Procédé selon l'une quelconque des revendications précédentes,
**caractérisé en ce que**
le matériau résistant à la corrosion utilisé est un acier, en particulier un acier ferrique chromé, qui génère l'oxyde d'aluminium ou l'oxyde de silicium servant de couche de protection anti-corrosion.

9. Procédé selon l'une quelconque des revendications précédentes,
**caractérisé en ce qu'**
on obtient la résistance à la corrosion de la structure perméable de telle sorte que le matériau utilisé à cet effet forme une couche de protection anti-corrosion pendant le fonctionnement de la pile à combustible ou pendant une étape de traitement préalable appropriée, en particulier au moyen d'un processus d'oxydation.

10. Procédé de fabrication d'une pile à combustible selon l'une quelconque des revendications précédentes,
**caractérisé par**
des fils ou des morceaux de fils ou des copeaux en matériau électro-conducteur intégrés dans la matrice.

11. Procédé de fabrication d'une pile à combustible selon l'une quelconque des revendications précédentes,
**caractérisé en ce que**
la liaison par complémentarité de matière entre la matrice résistante à la corrosion et la plaque bipolaire ou le cadre métallique est formée au moyen d'un brasage ou d'un soudage ou d'un collage.
